Europäisches Patentamt

European Patent Office

Office européen des brevets

(11) Publication number: **0 390 392**
**A2**

# EUROPEAN PATENT APPLICATION

(21) Application number: 90302947.8

(22) Date of filing: **19.03.90**

(51) Int. Cl.⁵: **B01D 53/22, B01D 53/04**

(30) Priority: **22.03.89 GB 8906594**

(43) Date of publication of application:
**03.10.90 Bulletin 90/40**

(84) Designated Contracting States:
**DE FR GB**

(71) Applicant: **The BOC Group plc**
**Chertsey Road**
**Windlesham Surrey GU20 6HJ(GB)**

(72) Inventor: **Garrett, Michael Ernest**
**92 York Road**
**Woking, Surrey(GB)**

(74) Representative: **Wickham, Michael et al**
**c/o Patent and Trademark Department The**
**BOC Group plc Chertsey Road**
**Windlesham Surrey GU20 6HJ(GB)**

(54) **Separation of gas mixtures.**

(57) Air is separated in a vessel 16 housing membranes 20. The air is pre-dried by means a vessel 6 housing membranes 8 relatively permeable to water vapour. The waste permeate gas from the vessel 16 is used to purge the permeate side of the membranes 8 in the drier vessel 6 and thus facilitates drying of the air.

In an alternative embodiment, drying is effected by pressure swing adsorption and the waste permeate gas from the vessel 16 is used as a purge gas in the regeneration of the sorbent.

FIG.1.

EP 0 390 392 A2

## SEPARATION OF GAS MIXTURES

This invention relates to the separation of gas mixtures, particularly air, which are laden with water vapour.

Although it was recognised in the nineteenth century that a selective gas separation could be performed as a result of different permeation velocities of the respective components of the mixture, not until the 1960s did suitable membranes with adequately high permeability and separation efficiencies become available to allow such gas separation to be performed on a significant commercial scale. Since the 1960s, the use of membranes to separate gas mixtures has become a well known technique in the production of industrial gases. Plants for the separation of gas mixture by membranes are constructed so as to present a large surface area of membrane to the gas mixture to be separated. For example, such plants may employ a multitude of identical, elongate, hollow fibres which are formed of a suitable semi-permeable membrane and which extend in parallel to one another. The fibres are appropriately mounted in a pressure vessel. The gas mixture to be separated is fed into the pressure vessel at or near one end outside the fibres. It flows along of the fibres. The insides of the fibres are maintained at a pressure lower than that which obtains on the outside of them. If the gas mixture to be separated consists of two components, the faster permeating component passes more and more to the low pressure side. Accordingly, the gas on the outside of the fibres (high pressure side) becomes richer in the slower permeating component as it flows across the outside of the fibres and product gas, rich in the more slowly diffusing component, may be withdrawn at pressure from the end of the pressure vessel opposite that at which the feed gas is introduced.

Such membrane plants are now available commercially for separating air. Membranes are employed which are relatively more permeable to oxygen than they are to nitrogen so that the product gas, at pressure is enriched in nitrogen. The advantage of known membranes for separating air is that as well as being relatively permeable to oxygen they are also able to separate carbon dioxide and water vapour from the incoming air. Nonetheless, it is viewed as being desirable in the art to remove water vapour from the incoming air. For this purpose, a drier in the form of a refrigerator or chiller is used which operates typically at a degree or two C above freezing point. See the paper entitled "Generon Air Separation in Systems - Membranes in Gas Separation and Enrichment", K B McReynolds, The Proceedings of the 4th BOC Priestley Conference, Royal Society of Chemistry Special Publication No 62, pp 342-350. (Generon is a registered trademark.) The use of such a chiller has a number of disadvantages, the most important of which is that the gas entering the vessel containing the membrane is not truly dry, ie it has a dew point of about $2^\circ$C. In addition, the operation of a mechanical refrigerator to give the necessary chilling involves extra consumption of energy, and the refrigerator itself is prone to mechanical failure. It is an aim of the present invention to provide a method and apparatus which provides an improved preliminary separation of water vapour from an incoming gas mixture for separation.

According to the present invention there is provided a method of separating a gas mixture comprising at least two main components and water vapour, wherein water vapour is extracted by a first body of sorbent from a compressed stream of the gas mixture while a second body of sorbent is being regenerated, the resulting water depleted stream is then separated by membranes to produce a permeate gas enriched in one main component and a pressurised product stream enriched in another main component, and a stream of permeate gas is employed to help desorb water from the sorbent being regenerated, and repeatedly substituting a regenerated body of sorbent for a body of sorbent charged with water and vice versa.

The invention also provides apparatus for performing this method comprising first and a second sorbent vessels each adapted to contain sorbent for sorbing water vapour from a pressurised gas mixture comprising at least two main components and water vapour; valve means operable to select through which of the vessels a pressurised stream of the gas mixture flows; a vessel for separating a gas mixture by membranes to produce a permeate gas enriched in one main component and a pressurised product stream enriched in another main component, and valve means operable to place the product gas side of the membrane vessel in communication with the selected sorbent vessel and for placing and to place the permeate side of the membrane vessel in communication with the sorbent vessel containing sorbent being regenerated.

According to another aspect of the present invention there is provided a method of separating a gas mixture comprising at least two main components and water vapour wherein water vapour is separated by preliminary membranes from a compressed stream of the gas mixture and the resulting water-depleted stream is then separated by further membranes to produce a dry permeate gas enriched in one main component and a pressurised product stream enriched in the other main component, wherein a stream of the dry permeate gas is passed over the preliminary membranes on their permeate side whereby to lower the partial pressure of water vapour on the permeate side of the preliminary membranes and thereby facilitate separation of the water vapour from the pressurised gas mixture.

The invention also provides apparatus for performing this method comprising a preliminary membrane separation vessel having an inlet for a pressurised gas stream, comprising at least two main components and water vapour, and containing membranes adapted to separate water vapour from the gas mixture, wherein the preliminary membrane vessel has an outlet for pressurised gas mixture communicating with an inlet to a main membrane gas separation vessel containing membranes adapted to effect separation as between two main components of the gas mixture, wherein the main vessel has on its permeate side an outlet which communicates with an inlet on the permeate side of the preliminary membrane vessel, there also being an outlet for moist gas from the membrane side of the said preliminary vessel.

The methods according to the invention exploit the fact the separation as between two main components of the dried gas produces a permeate gas with an even lower dew point than the dried gas with the result that this permeate gas may with advantage be used to regenerate sorbent or purge the permeate side of membranes used to dry the incoming gas mixture.

The methods and apparatus according to the invention are particularly suited for use in separating air. Membranes that effect a separation as between nitrogen and oxygen are well known in the art.

When sorbent is used to dry the incoming gas mixture, it may for example be a desiccant such as alumina. The alumina is preferably used in particulate form in at least two separate beds.

Examples of suitable membranes for drying the incoming gas are disclosed in US Patent No 4 783 201.

Methods and apparatus according to the present invention will now be described by way of example with reference to the accompanying drawings, in which:

Figure 1 is a schematic circuit diagram of a first air separation plant; and

Figure 2 is a schematic circuit diagram of a second air separation plant.

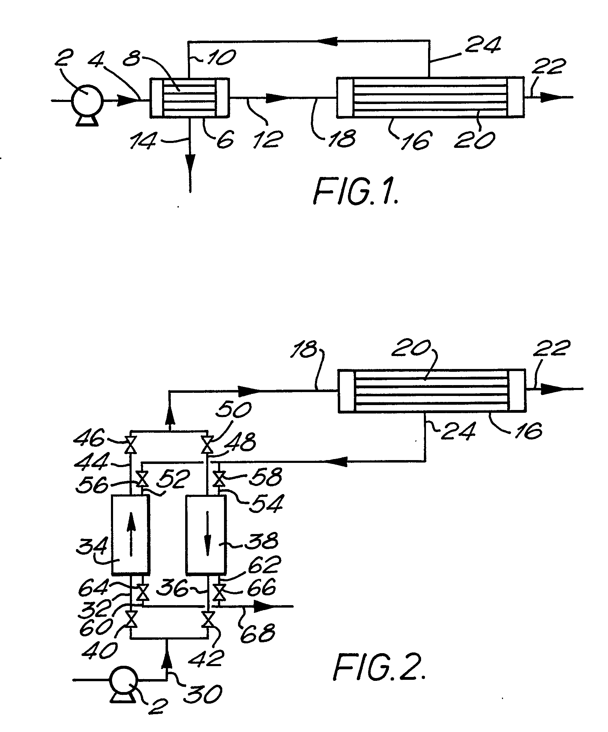

Referring to Figure 1 of the drawings air is compressed in compressor 2 and fed to an inlet 4 of vessel 6 containing membranes 8. The vessel 6 has a second gas inlet 10 and two outlets 12 and 14. The inlet 2 and outlet 10 are opposed to one another as are the inlet 12 and outlet 14. The compressed air flows through the vessel 6 from the inlet 4 to the outlet 10. Its path through the vessel 6 takes it across one surface of each of the membranes 8 in the vessel 6. The membranes are of a composition and molecular structure such that water vapour diffuses or permeates therethrough relatively rapidly in comparison with oxygen and nitrogen. Accordingly, the air is depleted in water vapour as it flows through the vessel 6 to the outlet 10. The permeate gas which is enriched in water vapour flows out of the vessel 6 through the outlet 14 at a pressure a little above atmospheric pressure. The separation of the water vapour from the incoming air is facilitated by there being an appreciable pressure difference between the air side and the permeate gas side of the membranes. Accordingly, therefore, the incoming air is preferably compressed in the compressor 2 to a pressure of at least 5 bars and typically to a pressure in the range 8 to 12 bars.

The pressurised air stream, now depleted in water vapour flows into a main membrane separation vessel 16 through an inlet 18. The vessel 16 contains membranes 20 which are of a composition and molecular structure so as to separate oxygen from nitrogen by virtue of the different relative rates of diffusion of these two gases therethrough. The vessel 16 has an outlet 22 for product nitrogen and an outlet 24 for permeate gas. The membranes 20 are arranged in the vessel 18 such that the incoming air flows along one side of each membrane from the inlet 18 to the outlet 22. Oxygen diffuses or permeates faster through the membranes 20 and thus the permeate gas is enriched in oxygen while the product gas leaving through the outlet 22 is enriched in nitrogen. Typically, nitrogen containing less than 5% by volume can be formed. The permeate gas leaves the vessel 16 through the outlet 24 at a pressure just above atmospheric pressure. The pressure drop across the membranes is effective to reduce the dew point of the permeate gas (in comparison to that of the air entering the vessel 16 through the inlet 18).

The dry permeate gas from the vessel 16 is led via a conduit 26 to the inlet 12 of the vessel 6 and thereby flushes with dry gas the permeate spaces of the vessel 6. Accordingly, the partial pressure of water vapour in the permeate spaces of the vessel 6 is reduced and this facilitates separation of the water vapour from the incoming air in the membrane separation vessel 6. Humid gas is discharged from the vessel 6 through the outlet 14. This gas is typically waste gas but it is enriched in oxygen and may therefore be used in any process in which humid oxygen enriched air may be employed, for example, in oxygenating waste water so as to reduce its biochemical oxygen demand.

In an alternative embodiment of the apparatus according to the invention the hollow members may in both vessels 6 and 16 be disposed transversely to the flow of gas to be separated and this gas admitted to the tabular passages inside the fibres. The permeate gas from the vessel 16 is passed over the surfaces of the membranes on the vessel 6 on their permeate gas side in accordance with the invention. In a similar embodiment of the invention there is just one vessel with transverse drying membranes disposed upstream of transverse membranes adapted to separate between oxygen and nitrogen. Permeate gas from the downstream membranes is withdrawn from the vessel and then returned to the vessel on the permeate gas side of the upstream membranes in accordance with the invention.

Referring now to Figure 2 of the accompanying drawings, like parts to those shown in Figure 1 are indicated by the same references as are used in Figure 1 and will not be described below. The primary difference between the plant shown in Figure 2 and that shown in Figure 1 is that a sorbent is employed to dry the incoming gas. Accordingly, the compressed air from the compressor 2 is fed to a conduit 30 which at one end communicates with an inlet pipe 32 leading to a vessel 34 containing particles of alumina desiccant and at its other end communicates with an inlet pipe 36 terminating in a second vessel 38 which is identical to vessel 34 one and also containing particles of alumina desiccant. An on-off valve 40 is located in the inlet pipe 32 and a similar valve 42 in the inlet pipe 36. In operation, only one of the valves 40 and 42 ie open at any one time.

With the valve 40 open and valve 42 closed, the air flows into the sorbent vessel 34 and water vapour is adsorbed therefrom by the desiccant in the vessel 34. The resulting dried gas leaves the vessel 34 through an outlet 44. This gas typically has a dew point of less than ?. The outlet pipe 34 has an on-off valve 46 located therein. The other vessel 38 has a similar outlet pipe 48 with an on-off valve 50 located therein. When the vessel 34 is being used to sorb water vapour from the incoming air, valve 46 is open and the valve 50 is in a closed position. The dry air thus produced is then separated in the vessel 16 as described with reference to Figure 1.

The vessels 34 and 38 each have at their respective tops inlets 52 and 54 respectively for the supply of dry permeate gas from the vessel 16. The inlet 52 has an on-off valve 56 located therein and the inlet 54 has a similar valve 58 located therein. The vessels 34 and 38 also have bottom outlet pipes 60 and 62 respectively. The pipes 60 and 62 on-off valves 64 and 66 respectively have located therein. When the vessel 34 is being regenerated the valves 56 and 64 are open while the valves 58 and 66 are closed, while when the vessel 38 is being regenerated the valves 58 and 66 are open and the valves 56 and 64 are in their closed positions. When the desiccant in the vessel 34 is fully charged with water vapour the valves 40 and 46 are closed and the valves 42 and 50 are opened so that the vessel 38 is now used to sorb water vapour from the incoming air. At the same time the vessel 34 is placed in communication with the conduit 26 by opening valves 56 and 64 and the dry waste permeate gas from the vessel 16 is used to drive off water vapour sorbed by the desiccant. The dry gas admitted to the vessel 34 through the inlet 52 drives off water vapour and moist air leaves the apparatus through an outlet conduit 68 communicating with the pipes 60 and 62.

By virtue of the pressure difference between the air leaving the compressor 2 and the permeate gas leaving the vessel 16, there is more than enough permeate gas to effect regeneration of the desiccant in the vessel 34 in a period of time not longer than the time it takes to saturate the desiccant with water vapour. When the desiccant in the vessel 38 becomes fully charged with water vapour, the valves 42, 50, 56 and 64 are closed and the valves 32, 46, 58 and 66 are opened. Accordingly, the vessel 34 once more receives incoming air for drying and the vessel 38 receives once more dry permeate gas so that the desiccant therein can be regenerated. Thus the drying apparatus shown in

Figure 2 may be operated continuously to supply dry air to the membrane separator 16.

## Claims

1. A method of separating a gas mixture comprising at least two main components and water vapour, wherein water vapour is extracted by a first body of sorbent from a compressed stream of the gas mixture while a second body of sorbent is being regenerated, the resulting water depleted stream is then separated by membranes to produce a permeate gas enriched in one main component and a pressurised product stream enriched in another main component, and a stream of permeate gas is employed to help desorb water from the sorbent being regenerated, and repeatedly substituting a regenerated body of sorbent for a body of sorbent charged with water and vice versa.

2. A method of separating a gas mixture comprising at least two main components and water vapour wherein water vapour is separated by preliminary membranes from a compressed stream of the gas mixture and the resulting water-depleted stream is then separated by further membranes to produce a dry permeate gas enriched in one main component and a pressurised product stream enriched in the other main component, wherein a stream of the dry permeate gas is passed over the preliminary membranes on their permeate side whereby to lower the partial pressure of water vapour on the permeate side of the preliminary membranes and thereby facilitate separation of the water vapour from the pressurised gas mixture.

3. A method according to claim 2, in which the preliminary membranes and the further membranes both extend in the general direction of flow of the gas mixture to be separated.

4. A method according to claim 2, in which the preliminary membranes and the further membranes both extend transversely to the flow of the gas mixture to be separated.

5. A method according to claim 4, in which both sets of membranes are located in the same vessel as one another.

6. Apparatus for separating a gas mixture comprising at least two main components and water vapour, comprising first and a second sorbent vessels each adapted to contain sorbent for sorbing water vapour from a pressurised gas mixture comprising at least two main components and water vapour; valve means operable to select through which of the vessels a pressurised stream of the gas mixture flows; a vessel for separating a gas mixture by membranes to produce a permeate gas enriched in one main component and a pressurised product stream enriched in another main component, and valve means operable to place the product gas side of the membrane vessel in communication with the selected sorbent vessel and for placing and to place the permeate side of the membrane vessel in communication with the sorbent vessel containing sorbent being regenerated.

7. Apparatus for separating a gas mixture comprising at least two main components and water vapour, comprising a preliminary membrane separation vessel having an inlet for a pressurised gas stream, comprising at least two main components and water vapour, and containing membranes adapted to separate water vapour from the gas mixture, wherein the preliminary membrane vessel has an outlet for pressurised gas mixture communicating with an inlet to a main membrane gas separation vessel containing membranes adapted to effect separation as between two main components of the gas mixture, wherein the main vessel has on its permeate side an outlet which communicates with an inlet on the permeate side of the preliminary membrane vessel, there also being an outlet for moist gas from the membrane side of the said preliminary vessel.

8. Apparatus according to claim 7, in which the preliminary membranes and the further membranes both extend in what in use is the general direction of flow of the gas mixture to be separated.

9. Apparatus according to claim 7, in which the preliminary membranes and the further membranes both extend transversely to what in use is the general direction of flow of the gas mixture to be separated.

10. Apparatus according to claim 9, in which the preliminary membrane vessel is an upstream region of the main membrane vessel.

FIG.1.

FIG.2.